# EUROPEAN PATENT APPLICATION

(11) **EP 4 382 884 A1**
(43) Date of publication of application: **12.06.2024**
(21) Application number: 22211539.6
(22) Date of filing: 05.12.2022
(51) Int. Cl.: G01M 17/06, B60W 30/18, B60W 50/04, G07C 5/08, B60W 30/12, G06N 3/08

(54) **METHOD FOR GENERATING TRAINING DATA FOR TRAINING AN ARTIFICIAL INTELLIGENCE, METHOD FOR TRAINING AN ARTIFICIAL INTELLIGENCE, METHOD FOR DETERMINING A WARNING VIBRATION SIGNAL, COMPUTER PROGRAM PRODUCT, TEST SYSTEM AND ASSISTENCE SYSTEM**

(71) Applicant: VOLKSWAGEN AG, 38440 Wolfsburg (DE)
(72) Inventor: Medghalchi, Bahareh, 38102 Braunschweig (DE)

(57) **Abstract**

The invention is concerned with a method for generating training data (11) for training an artificial intelligence (6) for determining a warning vibration signal (18) on a steering wheel (3) of a motor vehicle (1) by a test system (12), comprising the steps of capturing a vibration on the steering wheel (3) by a capturing device (4) of the test system (12), generating a vibration signal (13) depending on the captured vibration by an electronic computing device (5) of the test system (12), generating a scalogram (14) of the vibration signal (13) by the electronic computing device (5), labeling the warning vibration signal (18) in the scalogram (14) by using a classification algorithm (15) for the warning vibration signal (18) by the electronic computing device (5), extracting the labeled warning vibration signal (18) from the vibration signal (13) by the electronic computing device (5), and generating the training data (11) depending on the extracted warning vibration signal (18) by the electronic computing device (5). Furthermore, the invention relates to a method for training an artificial intelligence (6), a method for determining a warning vibration signal (18), a computer program product, a test system (12) and/or an assistance system (2).

## Description

The invention relates to a method for generating training data for training an artificial intelligence for determining a warning vibration signal on a steering wheel of a motor vehicle by a test system. Furthermore, the invention relates to a method for training an artificial intelligence for determining a warning vibration signal on a steering wheel of a motor vehicle by using the training data. Another aspect of the invention relates to a method for determining a warning vibration signal on a steering wheel of a motor vehicle by an assistance system of the motor vehicle, to a computer program product with program code means, to a test system for generating training data for training an artificial intelligence for determining a warning vibration signal on a steering wheel of a motor vehicle and to an assistance system for determining a warning vibration signal on a steering wheel of a motor vehicle.

Active motor vehicle safety is a technology that not only tries to prevent accidents intelligently but also reduces the impact of dangerous driving situations. It monitors the performance of the vehicle and takes care of the surroundings consistently and attempts to prevent accidents before they actually happen or at least mitigate the damages. This procedure is carried out through analyzing the data which are recalled through the sensors during the trip. Lane support system (LSS) is one of the active vehicle safety functionalities which controls the distance of the motor vehicle to the lane marking and warns the driver if there is an unintentional drift with the risk of crossing the line on the street. LSS is one of the most important criteria which are often controlled by the so-called Euro NCAP for assessing the car safety performance. Euro NCAP is a voluntary vehicle safety rating system that provides European consumers with information regarding the safety of passenger vehicles. Therefore, it is important for the automobile manufactures that their motor vehicles pass the test which are conducted, for example, by the Euro NCAP to assess safety functionalities of the motor vehicles.

At the moment, when variation from the lane is recognized by the sensors, and slight vibration on the steering wheel is generated, and this vibration is a key sign which shows that the LSS system has recognized and reacted to the deviation. This vibration is mostly noticeable through the data which are recorded by the sensors that measure the moment on the steering column. Detecting the time interval is not only of high significance for the car manufactures but also as a decisive matric for Euro NCAP to detect the time point and the time interval, when and how long the motor vehicle under test has reacted to the lane deviation, in other words, they conduct tests to see, whether the LSS system of the motor vehicles react to the motor vehicles deviation and whether the driver would be warned and gotten back to the lane.

Therefore, an OEM (Original Equipment Manufacturer) tries to run tests to assess the LSS performance in advance and see if the vibration is generated and find the start and end point of the warning vibration.

Considering the number of tests which are conducted and should be checked, monitoring every single time series data which is recorded by the sensors and finding general vibration intervals manually is time-consuming and cumbersome task. Therefore, an automated super vision detection algorithm is required. Furthermore, sometimes in the cases where the vehicles are tested either by the Euro NCAP administrator, who actually drives the cars for running a test or by a random inspector, it can be an illusion to find whether the driver has felt the warning vibration on time. Therefore, having an automated algorithm which can inspect the time series signal and find the time interval where the steering wheel have vibrated will automate the inspection procedure.

US 2016/0221575 A1 relates to a method for optimizing a driver assistance system having the work steps of defining at least one driver assistance system A to be optimized, determining at least one vehicle parameter function that is suitable for characterizing an operating state of a vehicle, and at least one environmental parameter function that is suitable for characterizing the surroundings of the vehicle, calculation of at least one driving situation characteristic function that characterizes a driving situation of the vehicle, particularly at least on the basis of the at least one vehicle parameter function and/or of the at least one environmental parameter function, calculation of at least one control intervention characteristic function that is suitable for characterizing the activity of the driver assistance system A, and calculation of a correction function that depends on the at least one driving situation characteristic function and characterizes a subjective perception of the driving situation by at least one passenger, particularly on the basis of the at least one control intervention characteristic function and on the basis of the at least one vehicle parameter function and/or of the at least one environmental parameter function.

US 2020/0346656 A1 provides a driver assist design analysis system including a processing system and a database that stores vehicle data, vehicle operational data, vehicle accident data, and environmental data related to the configuration and operation of a plurality of vehicles with driver assist systems or features. The driver assist design analysis system also includes one or more analysis engines that execute on the processing system to determine one or more driving anomalies based on the vehicle operational data, and that correlate or determine a statistical relationship between the driving anomalies and the operation of the driver assist systems or features. The driver assist design analysis system then determines an effectiveness of operation of one or more of the driver assist systems or features based on the statistical relationship to determine a potential design flaw in the driver assist systems or features, and the driver assist design analysis system notifies a user or receiver of the potential design flaw.

It is an object of the invention to provide a method for generating training data, a method for training an artificial intelligence, a method for determining a warning vibration signal, a computer program product, a test system as well as an assistance system, by which detecting a warning vibration signal on a steering wheel may be detected in an efficient way.

This object is solved according to a method for generating training data, a method for training an artificial intelligence, a method for determining a warning vibration signal on a steering wheel, a computer program product, a test system as well as an assistance system according to the independent claims. Advantageous forms of configuration are presented in the dependent claims.

One aspect of the invention relates to a method for generating training data for training an artificial intelligence for determining a warning vibration signal on a steering wheel of a motor vehicle by a test system. A vibration on the steering wheel is captured by a capturing device of the test system. A vibration signal is generated depending on the captured vibration by an electronic computing device of the test system. A scalogram of the vibration signal is generated by the electronic computing device. The warning vibration signal is labeled in the scalogram by using a classification algorithm for the warning vibration signal by the electronic computing device. The labeled warning vibration signal is extracted from the vibration signal by the electronic computing device and the training data is generated depending on the extracted warning vibration signal by the electronic computing device.

Therefore, an automated inspection algorithm is introduced, which can ease an accelerated monitoring through the artificial intelligence, and one can found out whether, in particular the vibration, has taken place throughout a test and in which exact time intervals, without the effort of opening every signal after the tests one by one and inspect with naked eye.

In particular, the active vehicle safety tests with the test system are run in so-called in trial areas or service providers, and the data which are gathered are gathered by sensors, and the tests are saved as time-series-signals. For developing an event detection algorithm, there is a need to find the sensors which are sensitive to steering wheel vibrations and whose data are affected by the event. As mentioned previously, the sensor that measures the moment at the steering column senses the conspicuous vibrations generated from the LSS (Lane Support System) and through observing the signal by an expert, the intended event and the respective time interval of the vibration can be determined by opening, observing, and inspecting the signals of each test one by one is time-consuming, and specifying the event starts and end points by an observer is imprecise. Therefore, the artificial intelligence is needed to inspect the signals automatically and find the event and preferably the corresponding time interval. In other words, the capturing device may be the sensor that measures the moment at the steering column.

After that, there is a need to define data points or objects for the artificial intelligence algorithm. For this aim, initially the recorded signals of the steering column moment which are gathered in tests are divided into user-defined-fixed-time-lengths. This approach is called windowing, meaning that the time-series-signal is divided into intervals of the same length. In order to execute the windowing and extract the timing windows, not only a fixed length of time for the windows but also a step size is defined according to which one advances along the signal and extracts the timing windows. Each window is considered as one object for the artificial intelligence algorithm. The second step is defining the labels for the objects of the artificial intelligence algorithm or windows. Therefore, there is a classification algorithm used that has been developed meaning that the algorithm tries to identify objects of a specific class amongst all different objects. In particular, for example, a one class classification (OCC) is used through learning from a training data set containing only the objects of that specific classification. The one class classification can be considered as opposite of anomaly detection. In anomaly detection, a small number of the object or data points is detected which are most unlike to the most of the data points, but in the one class classification the aim is to detect the small number of the data points or objects which are most alike to each other and probably to a single group but very different from the rest of the objects.

In this regard, for labeling the window or objects of the artificial intelligence algorithm, a one class classification strategy is used, meaning that a window is always labeled as 0 expect when it is located in the time intervals, where the event is occurred. In other words, the windows which have experienced the event are labeled as 1 and all other windows are labeled as 0.

The third step is feature extraction. After gathering the windows of label 1 and 0, a feature extraction method is used for extracting suitable features from timing windows. The visual representation such as the scalogram are one of the feature extraction methods. Those methods have enabled the electronic computing device to take the advantage of the image processing artificial networks for analyzing time series data. In particular, a scalogram is created from each timing window. Scalograms can be calculated and visualized perfectly by programming software such as MATLAB and Python.

To accurately analyze real-world signals that have locally abrupt changes, a class of functions is needed that is well-localized in time and frequency. A wavelet is a decaying wave which has zero mean and unlike sinus and cosine functions which extend to infinity, a wavelet exists only for a finite duration. A wavelet would be scaled or shifted. By scaling a wavelet, it is going to be extended or be compressed. A scaling factor corresponds to how much a signal is scaled in time, and it is inversely proportional to the frequency, meaning that a larger scale factor results in a stretched wavelet which corresponds to the lower frequency, and smaller scale factor results in a shrunken wavelet which corresponds to a higher frequency. An extended wavelet will result in capturing slowly varying changes in signal and a shrunk wavelet will help to detect abrupt changes. By shifting a wavelet of different scales through the time signal, the local variation of a signal is detected. This concept introduces the continuous wavelet transform (CWT). Scalograms are a form of transforming CWT into a three-dimensional tensor, with a predetermined number of layers, in which each layer corresponds to the conventions of the signal data with a different scale of the mother wavelet for each layer. After labeling the windows and creating scalograms from each window, the scalograms which are labeled with 0 and 1 are input for training the artificial intelligence algorithm. By creating the scalograms from all of the windows, it is observable that the scalograms of label 1, that represents the common event, contain a very similar pattern, which is very different from the scalograms of label 0, which belongs to the windows that do not refer to the same event.

The fourth step is selecting an appropriate artificial intelligence algorithm. Along with the main strategy, namely one class classification, a method is developed, which detects the objects of the intended class (the objects/scalograms/windows), which were included in event presented time intervals, and labeled then with 1 and ignore all other objects that do not belong to this class and label them as 0. Therefore, the artificial intelligence algorithm is selected that can learn the common pattern presented in the scalograms of label 1 and ignore all other scalograms.

According to an embodiment of the invention, the classification algorithm is an one class classification algorithm. As already mentioned, the one class classification algorithm can label the scalogram as 0, wherein by 0 no event is detected and with 1, wherein there the event, in particular the warning vibration, is detected. Therefore, an easy classification algorithm is presented, for generating the training data.

Furthermore, is it advantageous when the vibration is divided into time frames and the vibration signal is generated depending on a vibration in a time frame. In particular, the vibration is divided in so-called window, and each window is analyzed by a scalogram.

Furthermore, the training data is generated for an autoencoder as the artificial intelligence. Autoencoders are a special type of the unsupervised networks which can operate perfectly as one class classificator. They could not be trained to produce a class or a digit as an output, but they can reproduce the inputs they were fed into the network. An autoencoder attempts to do two things. First, the autoencoder compresses the input data into a lower dimension. Then, the autoencoder tries to recreate the original input data from those lower dimensional representations. The difference between the attempted recreation and original input is called reconstruction error. By training the autoencoder to minimize the reconstruction error on the given dataset, the autoencoder learns to explore the natural hidden structure in the data and find an efficient lower dimensional representation. The initial layers of the autoencoder network which compress the data, are called encoder part. It transforms the original input to the lower dimensional representations. The encoder approximates the function that maps the data from its full input space into a lower dimensional coordinate system. The second part of an autoencoder is called a decoder. A decoder attempts to recreate the original input, using the output of the encoder. In other words, it reverses the encoding process and recreates a higher dimensional mapping from the data with lower dimensions. The high dimensional data should have the same number of dimensions as the input data. Therefore, throughout the training process, the encoder tries to find the most efficient way to condense the data into a lower dimension, while the decoder tries to decode the lower dimensional data to minimize the reconstruction error and when autoencoder network is trained based on the inputs which have common hidden structure, the autoencoder will learn to reproduce the similarity, and as a result the amount of reconstruction errors will be getting lower and lower for the inputs containing that special similarity. Since the network has learned to reproduce the similarity during the training process for the test input data containing similarity in their structure, the network will output the lower reconstruction error. In this way, one can take the advantage of reconstruction error and use it as a metric for detecting the data points or objects, which belong to one specific class or refer to a special event and ignore all other different data points or objects. All encoders take both numerical input data as well as images and visual representations such as scalograms and spectrograms as input. Therefore, an autoencoder is trained based on the scalograms of label 1. In this regard, the autoencoder learns to minimize the reconstruction error for the scalogram of label 1 or timing windows containing the event, and since the network has not been fed with the scalograms of the label 0 by testing the network with scalograms of label 1, it results in the higher amount of the reconstruction error. By choosing an appropriate threshold for the reconstruction error, the algorithm is able to differentiate between the scalograms of label 1 and 0. In other words, by training an autoencoder based on scalograms of labels 1, an intelligent tool is developed which can detect and identify the scalograms of label 1 or rather timing windows containing the event and ignore all other scalograms.

According to another embodiment, the warning vibration signal is generated by a lane assistance system of the motor vehicle. In particular, as already mentioned, a lane assistance system or the LSS generates a vibration in the steering wheel, when for example, the motor vehicle is going to cross the lane. Therefore, it is advantageous, if the training data for this event are generated.

Another aspect of the invention relates to a method for training an artificial intelligence for determining a warning vibration signal on a steering wheel of a motor vehicle by using the training data according to the preceding aspect. In particular, the artificial intelligence is trained by the method according to the preceding aspect. Furthermore, in particular, the artificial intelligence is an autoencoder.

A still further aspect of the invention relates to a method for determining a warning vibration signal on a steering wheel of a motor vehicle by an assistance system of the motor vehicle. A vibration on the steering wheel is captured by a capturing device of the assistance system. A vibration signal is generated depending on the captured vibration by an electronic computing device of the assistance system. A scalogram of the vibration signal is generated by the electronic computing device, and a warning vibration signal in the vibration signal is determined by using an artificial intelligence according to the preceding aspect.

In particular, the assistance system and the test system may be configured with the same means, in particular, with the same capturing device and the same electronic computing device. Therefore, the capturing device from the test system may be the same capturing device as the capturing device from the assistance system. Furthermore, the electronic computing device from the test system may be the same electronic computing device as the electronic computing device from the assistance system.

According to an embodiment, a time frame between a lane event and the determined warning vibration signal is determined by the electronic computing device. Furthermore, the lane event is a potential lane crossing of the motor vehicle in the future. Furthermore, the potential lane crossing is determined depending on captured surroundings by a further capturing device of the assistance system, for example, by a camera or a radar sensor of the motor vehicle. Furthermore, a threshold for the time frame is provided and the determined time frame is evaluated depending on the provided threshold. Therefore, in order to use the developed artificial intelligence algorithm for detecting the events throughout the time-series signal, first the recorded signal is going to be windowed according to the same window size and step size that was used in a training step after advancing through the signal and extracting the timing window, the respective scalogram of each window is going to be recreated. Then, the scalograms enter the trained autoencoder network in temporal order, and then the reconstruction error of each scalogram is calculated. If the reconstruction error is lower than the specified threshold, the scalogram or the respective timing window is labeled as 1, meaning that it is probable to have a trace of the event in the respective timing window, and the scalograms with reconstruction errors higher than the threshold will be labeled as 0.

In practice, by evaluating the introduced method for each signal, there is a sequence of timing windows such that for each single window, the respective label is determined by the autoencoder. Observing the sequence of the label throughout the time series signals reveals that within the time intervals where the event has taken place, a set of windows or scalograms in a row labeled with 1 are apparent. Moreover, for specifying the start and end of the time interval, when the event was present, the starting point of the initial window and the end point of the last window with the label 1 is taken.

Other than windows which locate within the time intervals, where the event was presented, some other windows with labels of 1 are apparent in other parts of the signal. In contrast to the windows of label 1, they situate rightly at the event positions, the windows that are incorrectly labeled with 1 are distributed very sparsely throughout the signal which can be considered as noise. Therefore, an extra filter can be defined to differentiate between the truly detected windows of label 1 with the noise. For this purpose, a noise filtering criterium is determined.

In order to identify a time interval as event-included, three or more windows in a row are labeled as 1, otherwise the detected window with the label of 1 is regarded as noise and is not considered as event representator.

A second aspect of the invention relates to a computer program product with program code means for performing a method according to the first aspect of the invention. Furthermore, the invention relates to a computer program product with program code means for performing a method according to the third aspect of the invention. The computer program product may also be a so-called computer program product.

Furthermore, the invention also relates to a computer-readable storage medium comprising the computer program product for performing a method according to the first aspect and/or for performing a method according to the second aspect.

A still further aspect of the invention relates to a test system for generating training data for training an artificial intelligence for determining a warning vibration signal on a steering wheel of a motor vehicle, comprising at least one capturing device and one electronic computing device, wherein the test system is configured for performing a method according to the first aspect of the invention and/or a test system for training the artificial intelligence, when the test system is configured for performing a method according to the second aspect of the invention.

Furthermore, the invention relates to an assistance system for determining a warning vibration signal on a steering wheel of a motor vehicle, comprising at least one capturing device and one electronic computing device with an artificial intelligence, wherein the assistance system is configured for performing a method according to the third aspect of the invention.

The test system and the assistance system may be configured in the same system. In particular, the test system and the assistance system may comprise the same capturing device as well as the same electronic computing device.

The electronic computing device may comprise at least processors, circuits, in particular integrated circuits, or further electronic means for performing the method.

A still further aspect of the invention relates to a motor vehicle comprising the test system and/or the assistance system.

The invention also comprises embodiments that provide features which afford additional technical advantages.

The invention also comprises the combinations of the features of the different embodiments.

In the following, an exemplary implementation of the invention is described. The figures show:
The object is accomplished by the subject matter of the independent claims. Advantageous developments with convenient and non-trivial further embodiments of the invention are specified in the following description, the dependent claims and the figures.
- Fig. 1: shows a schematic view according to an embodiment of a motor vehicle comprising an embodiment of an assistance system;
- Fig. 2: shows a schematic flow chart according to an embodiment of a method for generating training data;
- Fig. 3: shows a schematic flow chart according to an embodiment for a method for training an artificial intelligence; and
- Fig. 4: shows a schematic flow chart according to an embodiment for a method for determining a warning vibration signal.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

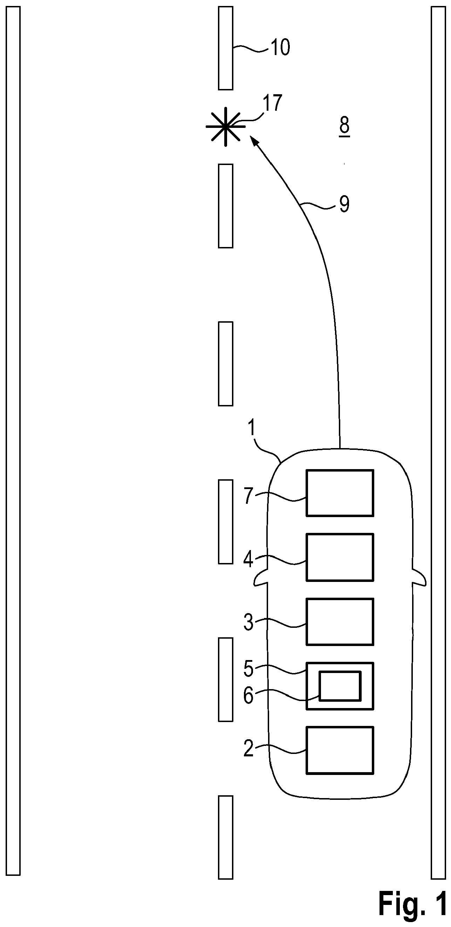

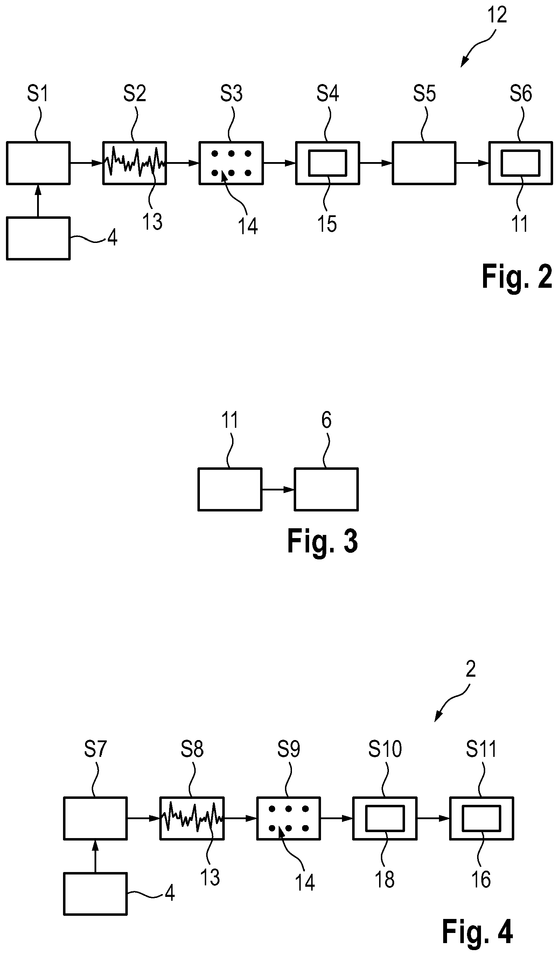

Fig. 1 shows a schematic top view according to an embodiment of a motor vehicle 10. The motor vehicle 10 comprises at least an assistance system 2 for determining a warning vibration signal 18 (Fig. 4) on a steering wheel of the motor vehicle 1. The assistance system 2 therefore comprises at least one capturing device 4 and one electronic computing device 5, wherein the electronic computing device 5 comprises at least one artificial intelligence 6.

In Fig. 1 the assistance system 2 is configured as a so-called lane support system (LSS). Therefore, the assistance system 2 may comprise a further capturing device 7, for example, a radar sensor or a camera, which captures surroundings 8 of the motor vehicle 1. The assistance system 2 may be configured for determining a future trajectory 9. According to the shown embodiment, the future trajectory 9 may cross a lane 10 in the future. Therefore, a vibration signal, in particular a warning vibration signal 18, may be generated for warning a user of the motor vehicle 1.

Fig. 2 shows a schematic flow chart according to an embodiment of a method for generating training data 11 for training the artificial intelligence 6 for determining a warning vibration signal 18 on the steering wheel 3 of the motor vehicle 1. Therefore, a test system 12 may be provided. The test system 12 may use the same capturing device 4 as well as the same electronic computing device 5 as the assistance system 2, for generating the training data 11. Alternatively, the test system 12 may comprise a separate electronic computing device as well as a separate capturing device. In a first step S1, a vibration on the steering wheel 3 is captured by the capturing device 4. A vibration signal 13 is generated in a second step S2 depending on the captured vibration by the electronic computing device 5. In a third step S3 a scalogram 14 of the vibration signal 13 is generated by the electronic computing device 5. In a fourth step S4, labeling the warning vibration signal 18 in the scalogram 14 is performed by using a classification algorithm 15 for the warning vibration signal by the electronic computing device 5. In a fifth step S5, the labeled warning vibration signal 18 is extracted from the vibration signal 13 by the electronic computing device 5, and the training data 11 is generated depending on the extracted warning vibration signal 18 by the electronic computing device 5. In particular, the classification algorithm 15 may be provided as a one class classification algorithm 15. Furthermore, the vibration is divided in a time frame, and the vibration signal 13 is generated depending on a vibration in a time frame.

Furthermore, the training data 11 may be generated for an autoencoder as the artificial intelligence 6.

Fig. 3 shows another flow chart according to an embodiment of a method for training an artificial intelligence 6 for determining a warning vibration signal 18 on the steering wheel 3 of the motor vehicle 1 by using the training data 11. In particular, it is shown that the training data 11 are an input for the artificial intelligence 6.

As already mentioned, autoencoders are used as a special type of the unsupervised networks which can operate perfectly as one class classificators. They could not be trained to produce a class or digit as an output, but they can reproduce the inputs that were fed into the network.

Fig. 4 another flow chart according to the embodiment for a method for determining a warning vibration signal 18 on the steering wheel 3 by the assistance system 2. In a seventh step S7, a vibration on the steering wheel 3 is captured by the capturing device 4. In an eights step S8, the vibration signal 13 is generated depending on the captured vibration by the electronic computing device 5 of the assistance system 2. In a ninth step S9, the scalogram 14 of the vibration signal 13 is generated by the electronic computing device 5. In a tenth step S10, a warning vibration signal 18 is determined in the vibration signal 13 by using the artificial intelligence 6. In an eleventh step S11, a time frame 16 between a lane event 17 (Fig. 1) and the determined warning vibration signal 18 is determined by the electronic computing device 5. In particular, the lane event 17 may be a potential lane crossing of the motor vehicle 1, as shown in Fig. 1 in the future.

Therefore, after training the autoencoder and testing the algorithm for a while to make sure that it is robust enough, the method is going to be used that the recorded signal of the steering column moments is an input of the given to the algorithm and the algorithm does the steps of windowing, creating scalograms 14 from each timing window, setting the sequence of the scalograms 14 in temporal order, and finding the reconstruction error for each scalogram 14 through the autoencoder and assigning the value of reconstruction error to each scalogram 14.

At this point, it is helpful that the comprehension to depict the outputs in form of a data frame. The scalograms 14 and their corresponding reconstruction error may be, for example, a table of two columns, in the first column the scalograms 14 are saved in temporal order, and in the second column, the respective reconstruction error of each scalogram 14 is calculated. Afterwards, the algorithm goes through the second column, where the reconstruction errors are saved in temporal order and will search for the spots where three or more scalograms 14 in a row are labeled with 1. Each set of those scalograms 14 would present on the time interval containing the event. For specifying the start and end point of the time interval, where the event was presented, the starting point of the initial window and the end point of the last window with the label 1 will be taken.

### Reference numerals

- 1: motor vehicle
- 2: assistance system
- 3: steering wheel
- 4: capturing device
- 5: electronic computing device
- 6: artificial intelligence
- 7: further capturing device
- 8: surroundings
- 9: trajectory
- 10: lane
- 11: training data
- 12: test system
- 13: vibration signal
- 14: scalogram
- 15: classification algorithm
- 16: time frame
- 17: lane event
- 18: warning vibration signal
- S1 to S11: steps of the method

## Claims

1. Method for generating training data (11) for training an artificial intelligence (6) for determining a warning vibration signal (18) on a steering wheel (3) of a motor vehicle (1) by a test system (12), comprising the steps of:
- Capturing a vibration on the steering wheel (3) by a capturing device (4) of the test system (12);
- Generating a vibration signal (13) depending on the captured vibration by an electronic computing device (5) of the test system (12);
- Generating a scalogram (14) of the vibration signal (13) by the electronic computing device (5);
- Labeling the warning vibration signal (18) in the scalogram (14) by using a classification algorithm (15) for the warning vibration signal (18) by the electronic computing device (5);
- Extracting the labeled warning vibration signal (18) from the vibration signal (13) by the electronic computing device (5); and
- Generating the training data (11) depending on the extracted warning vibration signal (18) by the electronic computing device (5).

2. Method according to claim 1, wherein the classification algorithm (15) is an one class classification algorithm.

3. Method according to any of the preceding claims, wherein the vibration is divided into time frames and the vibration signal (13) is generated depending on a vibration in a time frame.

4. Method according to any of the preceding claims, wherein the training data (11) is generated for an Autoencoder as the artificial intelligence (6).

5. Method according to any of the preceding claims, wherein the warning vibration signal (18) is generated by a lane assistance system (2) of the motor vehicle (1).

6. Method for training an artificial intelligence (6) for determining a warning vibration signal (18) on a steering wheel (3) of a motor vehicle (1) by using the training data (11) according to any of claims 1 to 5.

7. Method for determining a warning vibration signal (18) on a steering wheel (3) of a motor vehicle (1) by an assistance system (2) of the motor vehicle (1), comprising the steps of:
- Capturing a vibration on the steering wheel (3) by an capturing device (4) of the assistance system (2);
- Generating a vibration signal (13) depending on the captured vibration by an electronic computing device (5) of the assistance system (2);
- Generating a scalogram (14) of the vibration signal (13) by the electronic computing device (5); and
- Determining a warning vibration signal (18) in the vibration signal (13) by using an artificial intelligence (6) according to claim 6.

8. Method according to claim 7, wherein a time frame (16) between detecting a potential lane event (17) in the future and the determined warning vibration signal (18) is determined by the electronic computing device (5).

9. Method according to claim 8, wherein the lane event (17) is a potential lane crossing of the motor vehicle (1) in the future.

10. Method according to claim 9, wherein the potential lane crossing is determined depending on captured surroundings (8) by a further capturing device (7) of the assistance system (2).

11. Method according to any of claims 7 to 10, wherein a threshold for the time frame (16) is provided and the determined time frame (16) is evaluated depending on the provided threshold.

12. Computer program product with program code means for performing a method according to any of claims 1 to 6.

13. Computer program product with program code means for performing a method according to any of claims 7 to 11.

14. Test system (12) for generating training data (11) for training an artificial intelligence (6) for determining a warning vibration signal (18) on a steering wheel (3) of a motor vehicle (1), comprising at least one capturing device (4) and one electronic computing device (5), wherein the test system (12) is configured for performing a method according to any of claims 1 to 5 and/or a test system (12) for training the artificial intelligence (6), wherein the test system (12) is configured for performing a method according to claim 6.

15. Assistance system (2) for determining a warning vibration signal (18) on a steering wheel (3) of a motor vehicle (1), comprising at least one capturing device (4) and one electronic computing device (5) with an artificial intelligence (6), wherein the assistance system (2) is configured for performing a method according to any of claims 7 to 11.
